# EUROPÄISCHE PATENTSCHRIFT

(11) **EP 2 586 162 B1**
(45) Veröffentlichungstag und Bekanntmachung des Hinweises auf die Patenterteilung: **14.01.2015**
(21) Anmeldenummer: 10730412.3
(22) Anmeldetag: 25.06.2010
(51) Int. Cl.: H04L 12/801, H04L 12/851, H04L 12/833, H04L 12/725

(54) **PRIORISIERTE ÜBERTRAGUNG VON DATENTELEGRAMMEN**
PRIORITIZED TRANSFER OF DATA TELEGRAMS
TRANSMISSION PRIORITAIRE DE TÉLÉGRAMMES DE DONNÉES

(43) Veröffentlichungstag der Anmeldung: 01.05.2013
(73) Patentinhaber: Siemens Aktiengesellschaft, 80333 München (DE)
(72) Erfinder: HEINE, Holger, 13409 Berlin (DE); JORRA, Stephan, 16548 Glienicke (DE); KAPP, Harald, 10709 Berlin (DE)
(86) Internationale Anmeldenummer: PCT/EP2010/059053
(87) Internationale Veröffentlichungsnummer: WO 2011/160696

(56) Entgegenhaltungen:
- EP-A2- 1 351 460
- WO-A1-01/26326
- US-B1- 7 292 577

## Beschreibung

Die Erfindung betrifft ein Verfahren zum Übertragen von Datentelegrammen von einem Sendegerät an zumindest ein Empfangsgerät, bei dem den zu übertragenden Datentelegrammen eine Prioritätsstufe zugeordnet wird, die eine bei der Übertragung des jeweiligen Datentelegramms derart zu berücksichtigende Priorität angibt, dass Datentelegramme mit einer höheren Prioritätsstufe gegenüber solchen mit einer niedrigeren Prioritätsstufe von dem Sendegerät bevorzugt über ein sowohl mit dem Sendegerät als auch mit dem Empfangsgerät in Verbindung stehendes physikalisches Kommunikationsmedium an das Empfangsgerät übertragen werden, wobei in dem Sendegerät jeder Prioritätsstufe ein Zwischenspeicherbereich zugeordnet wird; die Datentelegramme über das physikalische Kommunikationsmedium über unterschiedliche logische Datenverbindungen übertragen werden, wobei die Anzahl logischer Datenverbindungen der Anzahl von Prioritätsstufen entspricht; im einer niedrigeren Prioritätsstufe zugeordneten Zwischenspeicherbereich vorliegende Datentelegramme so lange über die dieser Prioritätsstufe zugeordnete logische Datenverbindung übertragen werden, bis zumindest ein Datentelegramm im einer höheren Prioritätsstufe zugeordneten Zwischenspeicherbereich vorliegt; und das im der höheren Prioritätsstufe zugeordneten Zwischenspeicherbereich vorliegende Datentelegramm über die der höheren Prioritätsstufe zugeordnete logische Datenverbindung übertragen wird. Außerdem betrifft die Erfindung auch ein entsprechendes elektrisches Gerät, das zur Übertragung von Datentelegrammen eingerichtet ist.

Ein solches Verfahren und ein solches elektrisches Gerät sind beispielsweise aus der EP 1 351 460 A2 bekannt.

Bei der Übertragung von Datentelegrammen zwischen elektrischen Geräten kann es aufgrund der begrenzten Übertragungsbandbreite eines zwischen den elektrischen Geräten vorhandenen physikalischen Übertragungsmediums zu Verzögerungen bei der Datenübertragung kommen. Solche Verzögerungen wirken sich insbesondere dann kritisch aus, wenn Datentelegramme mit sehr wichtigem und/oder kurzfristig zu übertragendem Dateninhalt davon betroffen sind, während bei anderen Datentelegrammen, deren Dateninhalt weniger wichtig ist und/oder eine längerfristige Übertragung erlaubt, davon weniger stark beeinflusst werden.

Die Übertragung von Daten unterschiedlicher Wichtigkeit kann bei sehr unterschiedlichen Szenarien von Bedeutung sein, wie an den folgenden Beispielen erläutert werden soll:
Gemäß einem ersten Beispiel findet eine Übertragung unterschiedlicher Datentelegramme über ein gemäß dem IP-Protokoll arbeitendes Kommunikationsnetzwerk eines Heim- oder Büronetzes mit Internetanschluss statt. Dort können z.B. Datentelegramme auftreten, die Teile einer Datei beinhalten, die von einem an das Kommunikationsnetzwerk angeschlossenen Endgerät in einem Download-Prozess angefordert worden ist und bei der die Übertragungsdauer oftmals eine eher untergeordnete Rolle spielt. Daneben können über dasselbe Kommunikationsnetzwerk aber auch z.B. solche Datentelegramme übertragen werden, die zum Zwecke der Übermittlung eines Spielfilmes an ein Abspielgerät gemäß einem sogenannten "Video-on-Demand"-Service dienen; solche Datentelegramme müssen - um Bildstörungen und/oder unverhältnismäßig lange Ladeunterbrechungen zu vermeiden - möglichst schnell und vollständig über das Kommunikationsnetzwerk übertragen werden.

Gemäß einem anderen Beispiel sollen Datentelegramme zwischen einzelnen Automatisierungsgeräten einer Energieautomatisierungsanlage übertragen werden. Hierbei können die Datentelegramme beispielsweise sogenannte Störschriebe - also während einer Störung zur späteren Analyse aufgezeichnete Messwertverläufe - zum Inhalt haben, die von einem elektrischen Feldgerät an eine zentrale Netzleitstelle übermittelt werden sollen. Diese Übertragung ist als nicht zeitkritisch anzusehen.

Über dasselbe physikalische Kommunikationsmedium müssen zwischen den Automatisierungsgeräten der Energieautomatisierungsanlage jedoch auch einen aktuellen Fehler kennzeichnende Meldungen und/oder kurzfristig auszuwertende Messwerte und/oder Steuerbefehle übertragen werden, die eher kurzfristig beim jeweiligen Empfänger eintreffen müssen, da die Automatisierungsanlage innerhalb möglichst kurzer Zeit darauf reagieren muss und daher eine Verzögerung bei der Übertragung von Datentelegrammen mit entsprechenden Inhalten nicht geduldet werden kann.

Um solche Verzögerungen bei der Übertragung von Datentelegrammen mit kritischem Inhalt zu vermeiden, ist man dazu übergegangen, den Datentelegrammen einzelne Prioritätsstufen zuzuordnen, die angeben, mit welcher Priorität ein Datentelegramm von den jeweiligen Sende- und Empfangsgeräten in einem Datenübertragungssystem zu behandeln ist. So ist z.B. vorgesehen, dass Sende- und/oder Empfangsgeräte Datentelegramme mit einer höheren Prioritätsstufe bevorzugt übertragen, während die Übertragung von Datentelegrammen einer niedrigerer Prioritätsstufe zugunsten den höherprioren Datentelegrammen zurückgestellt wird. Dieses auch unter dem Sammelbegriff "Quality of Service" bekannte Verfahren hat jedoch den Nachteil, dass es eine Untersuchung der Datentelegramme nach einer die Prioritätsstufen angebenden Markierung, einem sogenannten "Flag", auf einer vergleichsweise hohen Schicht des für die Datenkommunikation aufgestellten OSI-Schichtenmodells notwendig macht, so dass die einzelnen Geräte, die an der Datenübertragung beteiligt sind, zunächst eine Analyse des Datentelegramms vornehmen müssen, um dessen Prioritätsstufe zu ermitteln und daraufhin das Datentelegramm entsprechend der ermittelten Prioritätsstufe bevorzugt zu behandeln oder zugunsten anderer Datentelegramme zurückzustellen.

Der Erfindung liegt daher die Aufgabe zugrunde, ein Verfahren der eingangs angegebenen Art anzugeben, bei dem die Inbetriebnahme eines Systems aus mindestens einem Sende- und einem Empfangsgerät deutlich vereinfacht werden kann. Eine weitere Aufgabe besteht darin, entsprechend eingerichtete Sende- und Empfangsgeräte anzugeben.

Zur Lösung dieser Aufgabe wird ein Verfahren der eingangs angegebenen Art erfindungsgemäß derart weitergebildet, dass zur Inbetriebnahme eines Systems aus zumindest einem Sendegerät und zumindest einem Empfangsgerät zumindest eines der Geräte eine Broadcast-Nachricht an eine systemweit definierte Zieladresse sendet, wobei diese systemweit definierte Zieladresse einer bestimmten Prioritätsstufe zugeordnet ist; und ein diese Broadcast-Nachricht empfangendes Gerät eine den Absender der Broadcast-Nachricht angebende Absenderadresse aus der Broadcast-Nachricht entnimmt und diese Absenderadresse fortan als dem Absender zugeordnete Zieladresse für diese Prioritätsstufe verwendet.

Bei dem Verfahren wird die Kommunikation der Datentelegramme über dasselbe physikalische Kommunikationsmedium in voneinander getrennten logischen Datenverbindungen vorgenommen, wobei jeder logischen Datenverbindung eine Prioritätsstufe fest zugeordnet ist. Bei dem physikalischen Kommunikationsmedium kann es sich z.B. um ein drahtgebundenes Medium, also beispielsweise ein Kupferleitung, eine Koaxialleitung oder eine Glasfaserleitung, oder um eine drahtlose Kommunikationsverbindung, beispielsweise eine Funkverbindung, handeln. Die Übertragung von Datentelegrammen kann beispielsweise gemäß einem Ethernet-Protokoll, einem Profibusprotokoll oder anderen Kommunikationsprotokollen stattfinden. Unter einer logischen Datenverbindung ist in diesem Zusammenhang quasi ein über ein physikalisches Kommunikationsmedium separat eingerichteter Übertragungskanal zu verstehen, der entsprechend des verwendeten Kommunikationsprotokolls eine separate Datenverbindung zwischen dem Sendegerät und dem Empfangsgerät definiert. Beispielsweise kann hierzu jeder logischen Datenverbindung eine eigene logische Adresse (z.B. eine MAC-Adresse (Media Access Control = Medienzugangssteuerung) oder eine spezielle Geräteadresse) des Empfangsgeräts zugeordnet sein.

Durch die Verwendung einzelner logischer Datenverbindungen und der festen Zuordnung jeweils einer Prioritätsstufe zu einer solchen logischen Datenverbindung wird gewährleistet, dass die Erkennung der jeweiligen Prioritätsstufe eines Datentelegramms bereits auf der untersten Schicht des OSI-Schichtenmodells stattfinden kann, ohne dass eine eingehende Analyse des Inhalts des Datentelegramms vorgenommen werden muss. Durch die Zuordnung einzelner Zwischenspeicherbereiche zu den Prioritätsstufen - und damit auch zu den logischen Datenverbindungen - wird jede logische Datenverbindung sozusagen aus einer eigenen Quelle mit Datentelegrammen gleicher Prioritätsstufe gespeist.

So lange nur Datentelegramme in dem Zwischenspeicherbereich einer niedrigeren Prioritätsstufe vorliegen, werden diese Datentelegramme nacheinander über die entsprechende logische Datenverbindung zum Empfangsgerät übertragen. Sobald jedoch in einem Zwischenspeicherbereich einer höheren Prioritätsstufe ein Datentelegramm vorliegt, wird dieses über die entsprechende logische Datenverbindung übertragen, während die Übertragung der Datentelegramme der niedrigeren Prioritätsstufe ausgesetzt wird.

Insbesondere dann, wenn eine Datenübertragung der einzelnen Datentelegramme nicht direkt von einem Sendegerät an das endgültige Empfangsgerät stattfindet, sondern die Übertragung der Datentelegramme in mehreren Übertragungsabschnitten unter Zwischenschaltung mehrerer Geräte (z.B. Router) erfolgt, bietet das erfindungsgemäße Verfahren deutliche Zeitvorteile gegenüber der bekannten Vorgehensweise, da keine Analyse des Inhalts des Datentelegramms nach einem die Prioritätsstufe angegebenen Flag vorgenommen werden muss, sondern allein durch die gewählte logische Datenverbindung die Prioritätsstufe des jeweiligen Datentelegramms eindeutig angegeben wird. Bei der Weiterleitung eines empfangenen Datentelegramms muss das Datentelegramm lediglich weiter auf einer logischen Datenverbindung der entsprechenden Prioritätsstufe übertragen werden. Mit anderen Worten werden sozusagen eindeutige "Schnellstraßen" für Datentelegramme mit hoher Prioritätsstufe über dasselbe physikalische Kommunikationsmedium eingerichtet, so dass ein hochpriores Datentelegramm während der kompletten Übertragung vom ursprünglichen Absender bis zum endgültigen Empfänger durchgehend auf der seiner Prioritätsstufe entsprechenden Schnellstraße übermittelt wird.

Das erfindungsgemäße Verfahren eignet sich sowohl für die Übertragung von Datentelegrammen von einem Sendegerät an ein Empfangsgerät als auch für die Übertragung von Datentelegrammen von einem Sendegerät an mehrere Empfangsgeräte.

Gemäß dem erfindungsgemäßen Verfahren kann vorteilhaft die Inbetriebnahme insbesondere eines Systems mit mehreren Sende- und/oder Empfangsgeräten deutlich vereinfacht werden, indem systemweit (also für alle beteiligten Geräte einheitlich) eine definierte Zieladresse - beispielsweise die MAC-Adresse "0xFFFFFFFFFFFF" - vorgesehen ist, an die eine sogenannte Broadcast-Nachricht, also ein Datentelegramm, das an alle an das physikalische Kommunikationsmedium angeschlossenen Geräte gerichtet ist, gesendet wird. Der definierten Zieladresse ist eine bestimmte Prioritätsstufe zugeordnet, so dass die diese Broadcast-Nachricht empfangenden Geräte fortan zur Datenübertragung von Datentelegrammen dieser Prioritätsstufe an den Absender der Broadcast-Nachricht dessen Absenderadresse als Zieladresse verwenden können.

Eine vorteilhafte Weiterbildung des erfindungsgemäßen Verfahrens sieht vor, dass die aktuelle Übertragung eines Datentelegramms über die der niedrigeren Prioritätsstufe zugeordnete logische Datenverbindung abgebrochen wird, sobald ein Datentelegramm im der höheren Prioritätsstufe zugeordneten Zwischenspeicherbereich vorliegt. Hierdurch kann gewährleistet werden, dass die Übertragung eines höherprioren Datentelegramms jeweils unmittelbar nach dessen Ablegen im entsprechenden Zwischenspeicherbereich der höheren Prioritätsstufe erfolgt und jegliche noch anstehende Übertragung niederpriorer Datentelegramme sofort abgebrochen wird.

In diesem Zusammenhang wird es als vorteilhaft angesehen, wenn dem durch den Übertragungsabbruch unvollständig übertragenen Datentelegramm eine Kennzeichnung angefügt wird, die das Datentelegramm als vom Empfangsgerät zu verwerfen markiert.

Auf diese Weise kann dem Empfangsgerät sehr einfach mitgeteilt werden, dass die Übertragung des entsprechenden niederprioren Datentelegramms unvollständig abgebrochen wurde und das Datentelegramm entsprechend nicht weiterzuverarbeiten ist. Dies bietet insbesondere dann einen Vorteil, wenn das unvollständig übermittelte Datentelegramm von dem Empfangsgerät an weitere Geräte weitergeleitet werden sollte und durch ein unvollständiges - und damit unbrauchbares - Datentelegramm unnötigerweise eine Belastung des nachfolgenden Kommunikationsmediums erzeugt werden würde.

Eine weitere Ausführungsform sieht in diesem Zusammenhang vor, dass die Übertragung des unvollständig übertragenen Datentelegramms wiederholt wird, nachdem das letzte aktuell im der höheren Prioritätsstufe zugeordneten Zwischenspeicherbereich vorliegende Datentelegramm übertragen worden ist. Auf diese Weise kann sichergestellt werden, dass auch ein unvollständig übermitteltes Datentelegramm nicht verloren geht, sondern nach der Übertragung der jeweils höherprioren Datentelegramme erneut übermittelt wird.

Alternativ zu einem Abbruch der Übertragung des niederprioren Datentelegramms kann jedoch auch vorgesehen sein, dass die aktuelle Übertragung eines Datentelegramms über die der niedrigeren Prioritätsstufe zugeordnete logische Datenverbindung zunächst abgeschlossen wird, bevor das im der höheren Prioritätsstufe zugeordnete Zwischenspeicherbereich vorliegende Datentelegramm über die der höheren Prioritätsstufe zugeordnete logische Datenverbindung übertragen wird.

Bei dieser Ausführungsform wird die aktuell stattfindende Übertragung eines Datentelegramms mit niedrigerer Prioritätsstufe auch dann vollständig abgeschlossen, wenn schon ein Datentelegramm einer höheren Prioritätsstufe im entsprechenden Zwischenspeicherbereich vorliegt. In dieser Ausgestaltungsform wird bewusst eine geringfügige Verzögerung der höherprioren Datentelegramme in Kauf genommen, um beispielsweise Mehraufwand bei der nochmaligen Übertragung eines unvollständig übertragenen Datentelegramms zu vermeiden.

Eine vorteilhafte Ausführungsform des erfindungsgemäßen Verfahrens sieht zudem vor, dass die Angabe der Prioritätsstufe für das jeweilige Datentelegramm mittels einer verwendeten Zieladresse des Empfangsgerätes vorgenommen wird.

Auf diese Weise kann besonders einfach eine Angabe der Prioritätsstufe des jeweiligen Datentelegramms vorgenommen werden, indem nämlich als Zieladresse des jeweiligen Datentelegramms eine der entsprechenden logischen Datenverbindung in dem Empfangsgerät zugeordnete Zieladresse verwendet wird. Folglich müssen keine über die Zieladresse hinausgehenden Kennzeichnungen der Datentelegramme vorgenommen werden.

Eine weitere vorteilhafte Ausführungsform sieht in diesem Zusammenhang vor, dass die für die unterschiedlichen Prioritätsstufen verwendeten Zieladressen nach einer festgelegten Regel ermittelt werden, so dass bei Kenntnis einer Zieladresse, die einer bestimmten Prioritätsstufe zugeordnet ist, alle Zieladressen der übrigen Prioritätsstufen aus der bekannten Zieladresse abgeleitet werden können.

Hierdurch können von einem Sendegerät bei Kenntnis einer einzigen einer bestimmten Prioritätsstufe zugeordneten Zieladresse des Empfangsgeräts alle anderen den übrigen Prioritätsstufen zugeordneten Zieladressen des Empfangsgeräts ermittelt werden, da dem Sendegerät die Regel, nach der die Zieladressen für die einzelnen Prioritätsstufen gebildet werden, bekannt ist und somit eine Ableitung der unbekannten Zieladressen aus der bekannten Zieladresse möglich ist.

Sind also zusätzlich die einzelnen Zieladressen der jeweiligen Prioritätsstufen wie zuvor beschrieben untereinander gemäß einer festgelegten Regel abhängig, so können anhand dieser einen Broadcast-Nachricht alle übrigen Zieladressen des entsprechenden Absendergerätes für die jeweiligen Prioritätsstufen bestimmt werden.

Zur Lösung der oben genannten Aufgabe wird außerdem auch ein elektrisches Gerät mit einer Kommunikationsschnittstelle zur Herstellung einer Kommunikationsverbindung über ein physikalisches Kommunikationsmedium mit zumindest einem weiteren elektrischen Gerät vorgeschlagen, wobei das physikalische Kommunikationsmedium dazu eingerichtet ist, Datentelegramme zwischen den Geräten zu übertragen. Erfindungsgemäß ist hierbei vorgesehen, dass die Kommunikationsschnittstelle zur Herstellung zumindest zweier logischer Datenverbindungen über das physikalische Kommunikationsmedium eingerichtet ist, wobei jeder logischen Datenverbindung eine unterschiedliche Prioritätsstufe zugeordnet ist, und das elektrische Gerät zur Übertragung der Datentelegramme gemäß einem Verfahren nach einem der vorstehend erläuterten Ansprüche 1 bis 7 eingerichtet ist.

Als besonders vorteilhaft wird es ferner angesehen, wenn das elektrische Gerät ein Automatisierungsgerät einer Energieautomatisierungsanlage, vorzugsweise ein elektrisches Schutzgerät, ein elektrisches Feldleitgerät, ein Stationsleitgerät, ein Gerät einer elektrischen Netzleitstelle oder ein in einer Energieautomatisierungsanlage verwendetes Kommunikationsgerät ist.

Die Erfindung wird im Folgenden anhand von Ausführungsbeispielen näher erläutert. Hierzu zeigen
- Fig. 1: ein System aus einem Sende- und einem Empfangsgerät, die zur Übertragung von Datentelegrammen untereinander eingerichtet sind, und
- Fig. 2: ein System aus drei elektrischen Geräten, die zur Übertragung von Datentelegrammen untereinander eingerichtet sind.

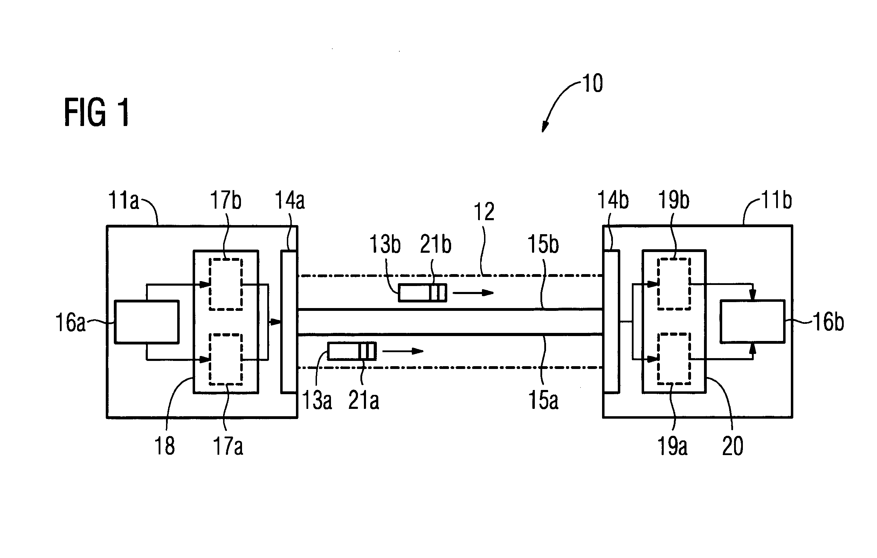

Fig. 1 zeigt ein System 10 mit einem Sendegerät 11a und einem Empfangsgerät 11b, zwischen denen ein physikalisches Kommunikationsmedium 12 zur Übertragung von Datentelegrammen 13a, 13b vorgesehen ist. Die Sende- und Empfangsgeräte 11a und 11b können beispielsweise netzwerkfähige Geräte (z.B. Personal Computer, Multimediageräte, Server, Router, Switches) eines Heim- oder Büronetzwerkes (ggf. mit zusätzlichem Internetanschluss) oder Geräte einer Automatisierungsanlage z.B. einer Energieautomatisierungsanlage sein. Bei dem physikalischen Kommunikationsmedium 12 kann es sich um ein drahtgebundenes Medium, also beispielsweise ein Kupferleitung, eine Koaxialleitung oder eine Glasfaserleitung, oder um eine drahtlose Kommunikationsverbindung, beispielsweise eine Funkverbindung nach dem WLAN-Standard, handeln. Die Übertragung von Datentelegrammen kann beispielsweise gemäß dem IP-Protokoll stattfinden.

Zur Ankopplung an das physikalische Kommunikationsmedium 12 weisen das Sendegerät 11a eine Schnittstelle 14a und das Empfangsgerät 11b eine Schnittstelle 14b auf. Die Schnittstellen 14a und 14b sind derart eingerichtet, dass mit ihnen über das einzige physikalische Kommunikationsmedium 12 mehrere logische Datenverbindungen zwischen dem Sendegerät 11a und dem Empfangsgerät 11b hergestellt werden können, von denen in Fig. 1 beispielhaft eine erste logische Datenverbindung 15a und eine zweite logische Datenverbindung 15b gezeigt sind.

Darüber hinaus weist das Sendegerät 11a eine Recheneinrichtung 16a, beispielsweise einen Mikroprozessor (CPU), auf, die - gegebenenfalls neben anderen Funktionen - zur Erzeugung von Nachrichten eingerichtet ist, die als Datentelegramme 13a, 13b an das Empfangsgerät 11b übermittelt werden sollen und dort von einer Recheneinrichtung 16b des Empfangsgeräts 11b weiterverarbeitet werden sollen. Dabei sollen die Nachrichten unterschiedlich wichtige Dateninhalte umfassen. Nachrichten mit wichtigen Dateninhalten sollen als Datentelegramme 13b mit hoher Priorität an das Empfangsgerät 11b übermittelt werden, während solche Datentelegramme 13a mit geringerer Wichtigkeit mit entsprechend niedrigerer Priorität an das Empfangsgerät 11b übermittelt werden sollen. Hierdurch wird gewährleistet, dass die Datentelegramme 13b mit wichtigem - da beispielsweise zeitkritischem - Dateninhalt sowohl von dem Sendegerät 11a als auch von dem Empfangsgerät 11b als hochprior erkannt und bevorzugt behandelt werden.

Um eine solche Übertragung von Datentelegrammen mit unterschiedlichen Prioritätsstufen möglichst einfach und mit hoher Geschwindigkeit durchführen zu können, legt die Datenverarbeitungseinrichtung 16a Datentelegramme 13a mit niedrigerer Prioritätsstufe in einem Zwischenspeicherbereich 17a eines Zwischenspeichers 18 ab, während solche Datentelegramme 13b mit höherer Prioritätsstufe im Zwischenspeicherbereich 17b des Zwischenspeichers 18 abgelegt werden.

In Abweichung zu der Darstellung gemäß Fig. 1, bei der die Zwischenspeicherbereiche 17a und 17b innerhalb desselben physikalischen Zwischenspeichers 18 eingerichtet sind, können als Zwischenspeicherbereiche 17a und 17b auch voneinander getrennten physikalische Zwischenspeicher (also beispielsweise zwei Flash-Speichermodule) verwendet werden; dies gilt ebenso für die unten näher erläuterten Zwischenspeicherbereiche 19a und 19b des Empfangsgerätes 11b.

Solange von der Datenverarbeitungseinrichtung 16a nur Datentelegramme 13a mit niedrigerer Prioritätsstufe in den Zwischenspeicherbereich 17a abgelegt werden, werden diese in der Reihenfolge ihres Ablegens in einer Warteschlange (auch "Queue" bezeichnet) angeordnet und nacheinander an die Schnittstelle 14a übergeben, die eine sequenzielle Übertragung der Datentelegramme 13a mit niedrigerer Prioritätsstufe über die logische Datenverbindung 15a an die Schnittstelle 14b des Empfangsgeräts 11b veranlasst. Die Schnittstelle 14b des Empfangsgeräts 11b erkennt, dass das Datentelegramm 13a über die logische Datenverbindung 15a mit niedrigerer Prioritätsstufe übertragen worden ist, und legt das empfangene Datentelegramm 13a in einem Zwischenspeicherbereich 19a eines Zwischenspeichers 20 des Empfangsgeräts 11b ab, wobei dieser Zwischenspeicherbereich 19a für Datentelegramme niedrigerer Prioritätsstufe reserviert ist.

Die Datenverarbeitungseinrichtung 16b des Empfangsgeräts 11b kann somit die in dem Zwischenspeicherbereich 19a in einer weiteren Warteschlange vorgehaltenen Datentelegramme 13a nacheinander aus dem Zwischenspeicherbereich 19a entnehmen und bearbeiten, wobei die Datenverarbeitungseinrichtung 16b des Empfangsgeräts 11b allein aufgrund der Tatsache, dass das Datentelegramm 13a in dem Zwischenspeicherbereich 19a abgelegt worden ist, Kenntnis darüber erlangt, dass dem Datentelegramm 13a eine niedrigere Prioritätsstufe zugeordnet worden ist.

Wenn die Datenverarbeitungseinrichtung 16a des Sendegeräts 11a ein Datentelegramm 13b mit sehr wichtigem Dateninhalt generiert hat, wird diesem entsprechend eine hohe Prioritätsstufe zugeordnet und es wird von der Datenverarbeitungseinrichtung 16a in dem Speicherbereich 17b des Zwischenspeichers 18 abgelegt. Bei einem solchen Datentelegramm 13b einer höheren Prioritätsstufe kann es sich beispielsweise um eine Meldung handeln, die einen von dem Sendegerät 11a erkannten Fehler angibt und zur Auswertung umgehend an die Datenverarbeitungseinrichtung 16b des Empfangsgeräts 11b weitergeleitet werden muss. Hierzu wird von der Schnittstelle 14a der Zwischenspeicherbereich 17b auf Vorliegen eines Datentelegramms 13b überwacht. Sobald die Schnittstelle 14a erkennt, dass zumindest ein Datentelegramm 13b in dem Zwischenspeicherbereich 17b abgelegt worden ist, wird dieses Datentelegramm 13b über die logische Datenverbindung 15b der höheren Prioritätsstufe an die Schnittstelle 14b des Empfangsgeräts 11b übermittelt.

Die Schnittstelle 14b des Empfangsgeräts 11b legt das Datentelegramm 13b der höheren Prioritätsstufe entsprechend in einem Zwischenspeicherbereich 19b des Datenspeichers 20 ab. Die Datenverarbeitungseinrichtung 16b erkennt, dass in dem Zwischenspeicherbereich 19b ein Datentelegramm 13b vorgehalten wird und entnimmt dieses dem Zwischenspeicher 20 bevorzugt zur weiteren Verarbeitung.

Um eine unmittelbare Übertragung des Datentelegramms 13b der höheren Prioritätsstufe auch dann zu gewährleisten, wenn aktuell über die logische Datenverbindung 15a noch ein Datentelegramm 13a der niedrigeren Prioritätsstufe übertragen wird, kann beispielsweise vorgesehen sein, dass die Übertragung des Datentelegramms 13a der niedrigeren Prioritätsstufe sofort abgebrochen wird, wenn ein Datentelegramm 13b in dem Zwischenspeicherbereich 17b abgelegt wird. Bevorzugt kennzeichnet die Schnittstelle 14a das in diesem Fall unvollständig übertragene Datentelegramm 13a als von der empfangenden Schnittstelle 14b zu verwerfen. Ein solches mit einer entsprechenden Unvollständigkeitsmarkierung versehenes Datentelegramm 13a wird von der Schnittstelle 14b des Empfangsgeräts 11b gar nicht erst an den Zwischenspeicherbereich 19a in dem Zwischenspeicher 20 weitergeleitet, sondern unmittelbar beim Empfang verworfen. Bei dieser Vorgehensweise kann durch den Abbruch der Übertragung des Datentelegramms 13a mit der niedrigeren Prioritätsstufe sofort mit der Übertragung des Datentelegramms 13b der höheren Prioritätsstufe über die physikalische Datenverbindung 15b begonnen werden, so dass keine Verzögerung bei der Übertragung des hochprioren Datentelegramms 13b eintritt.

Sobald das Datentelegramm 13b - und gegebenenfalls weitere noch in dem Zwischenspeicherbereich 17b vorliegende hochpriore Datentelegramme - übertragen worden sind, setzt die Schnittstelle 14a die Übertragung der niederprioren Datentelegramme aus dem Zwischenspeicherbereich 17a beginnend mit demjenigen Datentelegramm fort, dessen Übertragung zuvor abgebrochen worden ist. Auf diese Weise kann erreicht werden, dass auch beim Abbruch der Übertragung kein Verlust von niederprioren Datentelegrammen auftritt.

Alternativ kann auch vorgesehen sein, dass zunächst die vollständige Übertragung des niederprioren Datentelegramms 13a über die logische Datenverbindung 15a abgewartet wird, anstatt dessen Übertragung unmittelbar abzubrechen. Erst danach wird das hochpriore Datentelegramm 13b über die logische Datenverbindung 15b übertragen. In diesem Fall muss eine leichte Verzögerung bei der Übertragung hochpriorer Datentelegramme in Kauf genommen werden.

Besonders einfach lässt sich die Prioritätsstufe für die einzelnen Datentelegramme 13a bzw. 13b dadurch angeben, dass in den Datentelegrammen 13a bzw. 13b unterschiedliche Zieladressen des Empfangsgeräts 11b zugeordnet werden. Solche unterschiedlichen Zieladressen sind in Fig. 1 schematisch als Rechtecke 21a (Zieladresse der niedrigeren Prioritätsstufe) und 21b (Zieladresse der höheren Prioritätsstufe) dargestellt. Bei solchen Zieladressen kann es sich beispielsweise um voneinander verschiedene MAC-Adressen des Empfangsgeräts 11b handeln. Hierbei muss außer der ohnehin einzutragenden Zieladresse in dem Datentelegramm 13a bzw. 13b kein eigener Eintrag zur Kennzeichnung der Prioritätsstufe vorgenommen werden.

Um insbesondere in Systemen, die zur Übertragung von Datentelegrammen mit mehr als zwei Prioritätsstufen eine vergleichsweise unaufwendige Verteilung der Zieladressen der einzelnen Prioritätsstufen vornehmen zu können, kann vorgesehen sein, dass die den jeweiligen Prioritätsstufen zugeordneten Zieladressen gemäß einer vorgegebenen Regel voneinander ableitbar sind. Beispielsweise kann vorgesehen sein, dass die Zieladresse aus einem ersten Bereich besteht, der das jeweilige Empfangsgerät, beispielsweise das Empfangsgerät 11b, angibt und dem ersten Bereich ein Suffix, beispielsweise eine laufende Nummerierung, angehängt ist, wobei mit einem steigenden Wert der Nummerierung eine Steigerung der Prioritätsstufe verbunden ist (beispielsweise Suffix "01": niedrigste Priorität, Suffix "02": mittlere Priorität, Suffix "03": höchste Priorität). Kennt das Sendegerät 11a die für Datentelegramme der niedrigsten Priorität zu verwendende Zieladresse des Empfangsgeräts 11b, so kann es daraus bei Kenntnis der entsprechenden Regel jeweils problemlos die Zieladressen für die übrigen Prioritätsstufen ableiten, ohne dass diese gesondert an das Sendegerät 11a übermittelt oder bei einer Parametrierung als Eintrag in diesem eingegeben werden müssten.

Obwohl in Figur 1 zur einfacheren Veranschaulichung von einem Sendegerät 11a und einem Empfangsgerät 11b gesprochen wird, kann die Übertragung der Datentelegramme über das physikalische Kommunikationsmedium 12 bidirektional, also in beiden Richtungen, erfolgen, so dass sowohl das Sendegerät 11a als auch das Empfangsgerät 11b jeweils als Sender und als Empfänger der Datentelegramme 13a, 13b auftreten können.

Ferner können anstelle der bei der Beschreibung von Figur 1 angenommenen zwei Prioritätsstufen selbstverständlich auch noch weitere Prioritätsstufen verwendet werden, die beschriebene Vorgehensweise wird dann auf die entsprechende Anzahl der vorhandenen Prioritätsstufen angepasst.

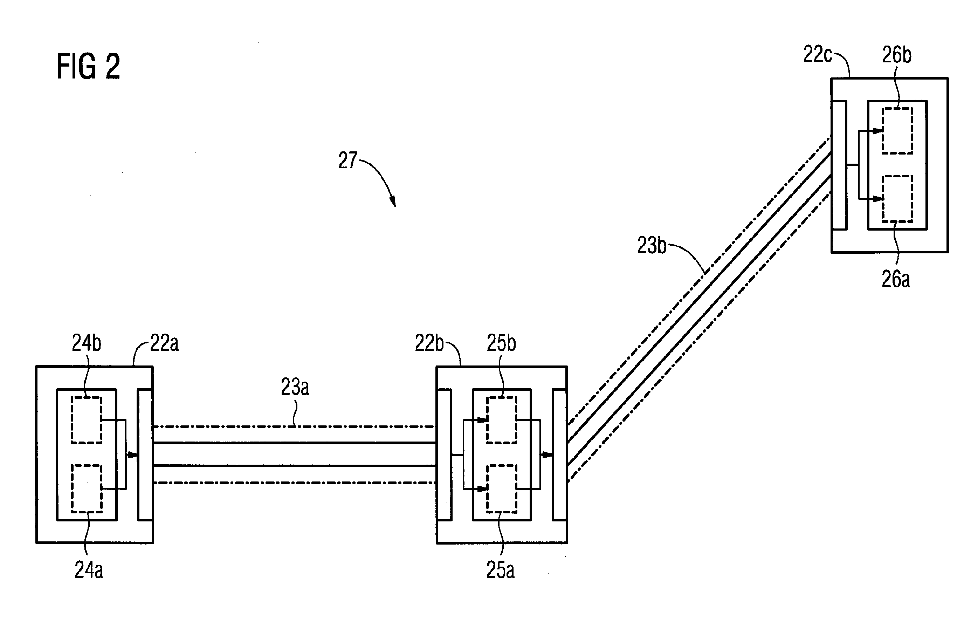

Fig. 2 zeigt ein System 27, bestehend aus drei elektrischen Geräten, bei denen es sich gemäß diesem Ausführungsbeispiel um Automatisierungsgeräte einer Energieautomatisierungsanlage handeln soll. Hierzu weist das System 27 ein elektrisches Schutzgerät 22a zur Überwachung einer Primärkomponente eines nicht dargestellten elektrischen Energieversorgungsnetzes (beispielsweise eine Freileitung oder ein Transformators), ein Stationsleitgerät 22b und eine Datenverarbeitungseinrichtung 22c einer zentralen Netzleitstelle auf. Das Stationsleitgerät 22b ist einerseits mit dem Schutzgerät 22a über das physikalische Kommunikationsmedium 23a (beispielsweise ein Stationsbus) und andererseits über das physikalische Kommunikationsmedium 23b mit der Datenverarbeitungseinrichtung 22c der zentralen Netzleitstelle verbunden.

Obwohl die physikalischen Kommunikationsmedien 23a und 23b in Figur 2 als voneinander getrennte physikalische Kommunikationsmedien dargestellt sind, kann es sich hierbei auch um dasselbe physikalische Kommunikationsmedium handeln, beispielsweise wenn alle Geräte 22a, 22b, 22c mit einem gemeinsamen Kommunikationsnetz in Verbindung stehen. Außer den Geräten 22a, 22b, 22c kann das System 27 auch weitere in der Figur 2 jedoch der Übersichtlichkeit halber nicht dargestellte Geräte umfassen.

Das Schutzgerät 22a erzeugt Datentelegramme mit niedrigerer Prioritätsstufe und legt diese in einem Zwischenspeicherbereich 24a ab, während von dem elektrischen Schutzgerät 22a generierte Datentelegramme einer höheren Prioritätsstufe in einem Zwischenspeicherbereich 24b abgelegt werden. Wie im Zusammenhang mit Fig. 1 eingehend erläutert, findet abhängig von der Prioritätsstufe der jeweiligen Datentelegramme - also abhängig von dem Speicherbereich 24a oder 24b, in dem die jeweiligen Datentelegramme abgelegt sind - eine Übertragung über die entsprechenden logischen Datenverbindungen, die auf dem physikalischen Kommunikationsmedium 23a eingerichtet sind, an das Stationsleitgerät 22b statt.

Von dem Stationsleitgerät 22b empfangene Datentelegramme niedriger Prioritätsstufe werden in einem Zwischenspeicher 25a abgelegt, während Datentelegramme einer höheren Prioritätsstufe in einem Zwischenspeicher 25b abgelegt werden.

In einer Energieautomatisierungsanlage generierte Nachrichten einer niedrigeren Prioritätsstufe können beispielsweise Messwerte bezüglich der Elektroenergiequalität, sogenannte Störschriebe (Messwertverläufe, die während eines Fehlers aufgenommen worden sind), statistische Daten, Parametersätze und ähnliche Daten sein, während Nachrichten einer höheren Prioritätsstufe beispielsweise einen Fehler in dem elektrischen Energieversorgungsnetz angebende Meldungen oder sofort weiterzuverarbeitende Messwerte sind. In einer Energieautomatisierungsanlage, die hinsichtlich ihrer Kommunikation gemäß dem Standard IEC 61850 betrieben wird, können solche höherprioren Nachrichten beispielsweise sogenannte GOOSE-Telegramme (Generic Object Oriented Substation Events) bzw. hochprior zu übertragende Sampled Measured Values, also Abtastwerte, sein.

Das Stationsleitgerät 22b kann die entsprechenden Datentelegramme beispielsweise einer eigenen Datenverarbeitung, z. B. einer Auswertung oder einer Anzeige des Dateninhalts der jeweiligen Datentelegramme zuführen. Hierbei berücksichtigt sie - wie bereits zu Fig. 1 erläutert - die anhand des jeweiligen Zwischenspeicherbereichs 25a, 25b erkennbare Prioritätsstufe des jeweiligen Datentelegramms.

Hinsichtlich einiger Datentelegramme kann jedoch alternativ oder zusätzlich auch eine Weiterleitung an die Datenverarbeitungseinrichtung 22c der zentralen Netzleitstelle vorgesehen sein. In einem solchen Fall übernimmt das Stationsleitgerät 22b quasi einerseits die Rolle eines Empfangsgeräts für die von dem Schutzgerät 22a an das Stationsleitgerät 22b übertragenen Datentelegramme und andererseits die Rolle eines Sendegerätes für diejenigen Datentelegramme, die von dem Stationsleitgerät 22b an die Datenverarbeitungseinrichtung 22c der zentralen Netzleitstelle weitergeleitet werden.

Folglich überträgt das Stationsleitgerät 22b unter Berücksichtigung der durch den jeweiligen Zwischenspeicherbereich 25a, 25b angegebenen Prioritätsstufe die jeweiligen Datentelegramme über die entsprechenden logischen Datenverbindungen des physikalischen Kommunikationsmediums 23b an die Datenverarbeitungseinrichtung 22c der zentralen Netzleitstelle, die in diesem Falle die Rolle des Empfangsgeräts gemäß Fig. 1 übernimmt und die empfangenen Datentelegramme in entsprechenden Zwischenspeicherbereichen 26a (für niederpriore Datentelegramme) und 26b (für hochpriore Datentelegramme) ablegt.

Die abgelegten Datentelegramme werden einer - in Fig. 2 nicht gezeigten - Recheneinrichtung (CPU) der Datenverarbeitungseinrichtung 22c der zentralen Netzleitstelle zugeführt, die dann eine weitere Datenverarbeitung bezüglich der empfangenen Datentelegramme vornimmt, beispielsweise um den Inhalt der Datentelegramme dem Leitstellenpersonal in Form von Tabellen und/oder Diagrammen darzustellen oder automatische Auswertungen hinsichtlich des Inhalts der Datentelegramme vorzunehmen.

Obwohl in Fig. 2 lediglich eine Datenübertragungsrichtung von dem Schutzgerät 22a über das Stationsleitgerät 22b an die Datenverarbeitungseinrichtung 22c der zentralen Netzleitstelle erläutert worden ist, kann die Kommunikation der Datentelegramme auch in umgekehrter Richtung stattfinden, so dass die Übertragungsmedien 23a und 23b für bidirektionale Datenübertragung ausgelegt sind. Beispielsweise können auf diese Weise niederpriore Parametrierungsdaten oder hochpriore Steuerbefehle von der Datenverarbeitungseinrichtung 22c der zentralen Netzleitstelle an das Stationsleitgerät 22b und/oder das Schutzgerät 22a entsprechend ihrer jeweiligen Prioritätsstufe übertragen werden.

Bei der Inbetriebnahme eines Systems, bei dem die einzelnen Geräte noch keine Kenntnis über die für die unterschiedlichen Prioritätsstufen zu verwendenden Zieladressen der jeweils anderen Geräte besitzen, kann vorteilhaft vorgesehen sein, dass zumindest ein Gerät eine sogenannte Broadcast-Nachricht an eine systemweit zum Zwecke der Adressenverteilung definierte Zieladresse sendet (beispielsweise die MAC-Adresse 0xFFFFFFFFFFFFF). Eine Broadcast-Nachricht ist eine Nachricht ohne vordefinierten Empfängerkreis, die an alle an das physikalische Kommunikationsmedium angeschlossenen Geräte übermittelt wird. Diese systemweit definierte Zieladresse ist einer bestimmten Prioritätsstufe, beispielsweise der niedrigsten Prioritätsstufe, zugeordnet. Jeder Empfänger der Broadcast-Nachricht entnimmt der Broadcast-Nachricht die ebenfalls eingetragene Absenderadresse des die Broadcast-Nachricht aussendenden Gerätes und verwendet diese Absenderadresse fortan als Zieladresse zur Übermittlung der Datentelegramme niedrigster Prioritätsstufe an den Absender.

Sofern die Zieladressen der einzelnen Prioritätsstufen voneinander - wie oben erläutert - abhängig sind, können sich die Empfänger der Broadcast-Nachricht aus der nunmehr bekannten Zieladresse für die niedrigste Prioritätsstufe die für alle anderen Prioritätsstufen zu verwendenden Zieladressen ableiten.

Die in den Figuren 1 und 2 dargestellten Systeme 10 und 27 gewährleisten eine schnelle und zuverlässige Übertragung von Datentelegrammen hoher Priorität und eine zuverlässige Übertragung von Datentelegrammen niedriger Priorität. Durch die Einrichtung von einzelnen logischen Datenverbindungen über die vorhandenen physikalischen Kommunikationsmedien und die feste Zuordnung von logischen Datenverbindungen zu einzelnen Prioritätsstufen kann auf unterster Ebene des OSI-Schichtenmodells beispielsweise durch Verwendung jeweils unterschiedlicher Zieladressen eine Kennzeichnung der jeweiligen Prioritätsstufe der einzelnen Datentelegramme erfolgen. Hierdurch kann das vorgeschlagene Verfahren insgesamt sehr einfach und dennoch zuverlässig gehalten werden, da beispielsweise auf höheren Ebenen des OSI-Schichtenmodells keine Rechenkapazität der einzelnen elektrischen Geräte mehr benötigt wird, um die Prioritäten der einzelnen Datentelegramme festzulegen oder zu ermitteln.

## Patentansprüche

1. Verfahren zum Übertragen von Datentelegrammen (13a, 13b) von einem Sendegerät (11a) an zumindest ein Empfangsgerät (11b), bei dem
- den zu übertragenden Datentelegrammen (13a, 13b) eine Prioritätsstufe zugeordnet wird, die eine bei der Übertragung des jeweiligen Datentelegramms (13a, 13b) derart zu berücksichtigende Priorität angibt, dass Datentelegramme (13a, 13b) mit einer höheren Prioritätsstufe gegenüber solchen mit einer niedrigeren Prioritätsstufe von dem Sendegerät (11a) bevorzugt über ein sowohl mit dem Sendegerät (11a) als auch mit dem Empfangsgerät (11b) in Verbindung stehendes physikalisches Kommunikationsmedium (12) an das Empfangsgerät (11b) übertragen werden, wobei
- in dem Sendegerät (11a) jeder Prioritätsstufe ein Zwischenspeicherbereich (17a, 17b) zugeordnet wird;
- die Datentelegramme (13a, 13b) über das physikalische Kommunikationsmedium (12) über unterschiedliche logische Datenverbindungen (15a, 15b) übertragen werden, wobei die Anzahl logischer Datenverbindungen (15a, 15b) der Anzahl von Prioritätsstufen entspricht;
- im einer niedrigeren Prioritätsstufe zugeordneten Zwischenspeicherbereich (17a) vorliegende Datentelegramme (13a) so lange über die dieser Prioritätsstufe zugeordnete logische Datenverbindung (15a) übertragen werden, bis zumindest ein Datentelegramm (13b) im einer höheren Prioritätsstufe zugeordneten Zwischenspeicherbereich (17b) vorliegt; und
- das im der höheren Prioritätsstufe zugeordneten Zwischenspeicherbereich (17b) vorliegende Datentelegramm (13b) über die der höheren Prioritätsstufe zugeordnete logische Datenverbindung (15b) übertragen wird,
**dadurch gekennzeichnet, dass**
- zur Inbetriebnahme eines Systems (10) aus zumindest einem Sendegerät (11a) und zumindest einem Empfangsgerät (11b) zumindest eines der Geräte (11a, 11b) eine Broadcast-Nachricht an eine systemweit definierte Zieladresse sendet, wobei diese systemweit definierte Zieladresse einer bestimmten Prioritätsstufe zugeordnet ist; und
- ein diese Broadcast-Nachricht empfangendes Gerät eine den Absender der Broadcast-Nachricht angebende Absenderadresse aus der Broadcast-Nachricht entnimmt und diese Absenderadresse fortan als dem Absender zugeordnete Zieladresse für diese Prioritätsstufe verwendet.

2. Verfahren nach Anspruch 1,
**dadurch gekennzeichnet, dass**
- die aktuelle Übertragung eines Datentelegramms (13a) über die der niedrigeren Prioritätsstufe zugeordnete logische Datenverbindung (15a) abgebrochen wird, sobald ein Datentelegramm (13b) im der höheren Prioritätsstufe zugeordneten Zwischenspeicherbereich (17b) vorliegt.

3. Verfahren nach Anspruch 2,
**dadurch gekennzeichnet, dass**
- dem durch den Übertragungsabbruch unvollständig übertragenen Datentelegramm (13a) eine Kennzeichnung angefügt wird, die das Datentelegramm (13a) als vom Empfangsgerät (11b) zu verwerfen markiert.

4. Verfahren nach Anspruch 2 oder 3,
**dadurch gekennzeichnet, dass**
- die Übertragung des unvollständig übertragenen Datentelegramms (13a) wiederholt wird, nachdem das letzte aktuell im der höheren Prioritätsstufe zugeordneten Zwischenspeicherbereich (17b) vorliegende Datentelegramm (13b) übertragen worden ist.

5. Verfahren nach Anspruch 1,
**dadurch gekennzeichnet, dass**
- die aktuelle Übertragung eines Datentelegramms (13a) über die der niedrigeren Prioritätsstufe zugeordnete logische Datenverbindung (15a) zunächst abgeschlossen wird, bevor das im der höheren Prioritätsstufe zugeordnete Zwischenspeicherbereich (17b) vorliegende Datentelegramm (13b) über die der höheren Prioritätsstufe zugeordnete logische Datenverbindung (15b) übertragen wird.

6. Verfahren nach einem der vorangehenden Ansprüche,
**dadurch gekennzeichnet, dass**
- die Angabe der Prioritätsstufe für das jeweilige Datentelegramm (13a, 13b) mittels einer verwendeten Zieladresse des Empfangsgerätes (11b) vorgenommen wird.

7. Verfahren nach Anspruch 6,
**dadurch gekennzeichnet, dass**
- die für die unterschiedlichen Prioritätsstufen verwendeten Zieladressen nach einer festgelegten Regel ermittelt werden, so dass bei Kenntnis einer Zieladresse, die einer bestimmten Prioritätsstufe zugeordnet ist, alle Zieladressen der übrigen Prioritätsstufen aus der bekannten Zieladresse abgeleitet werden können.

8. Elektrisches Gerät (11a) mit
- einer Kommunikationsschnittstelle (14a) zur Herstellung einer Kommunikationsverbindung über ein physikalisches Kommunikationsmedium (12) mit zumindest einem weiteren elektrischen Gerät (11b), wobei das physikalische Kommunikationsmedium (12) dazu eingerichtet ist, Datentelegramme (13a, 13b) zwischen den Geräten (11a, 11b) zu übertragen,
**dadurch gekennzeichnet, dass**
- die Kommunikationsschnittstelle (14a) zur Herstellung zumindest zweier logischer Datenverbindungen (15a, 15b) über das physikalische Kommunikationsmedium (12) eingerichtet ist, wobei jeder logischen Datenverbindung (15a, 15b) eine unterschiedliche Prioritätsstufe zugeordnet ist; und
- das elektrische Gerät (11a) zur Übertragung der Datentelegramme (13a, 13b) gemäß einem Verfahren nach einem der Ansprüche 1 bis 7 eingerichtet ist.

9. Elektrisches Gerät (11a) nach Anspruch 8,
**dadurch gekennzeichnet, dass**
- das elektrische Gerät (11a) ein Automatisierungsgerät einer Energieautomatisierungsanlage, vorzugsweise ein elektrisches Schutzgerät, ein elektrisches Feldleitgerät, ein Stationsleitgerät, ein Gerät einer elektrischen Netzleitstelle oder ein in einer Energieautomatisierungsanlage verwendetes Kommunikationsgerät ist.

## Claims

1. Method for transmitting data telegrams (13a, 13b) from a transmitter (11a) to at least one receiver (11b), in which
- a priority level is allocated to the data telegrams (13a, 13b) to be transmitted, which level specifies a priority to be taken into consideration in the transmission of the respective data telegram (13a, 13b) in such a manner that data telegrams (13a, 13b) having a higher priority level compared with those having a lower priority are transmitted preferably by the transmitter (11a), via a physical communication medium (12) connected both to the transmitter (11a) and to the receiver (11b), to the receiver (11b), wherein
- in the transmitter (11a), an intermediate storage area (17a, 17b) is allocated to each priority level;
- the data telegrams (13a, 13b) are transmitted via the physical communication medium (12) via different logical data links (15a, 15b), the number of logical data links (15a, 15b) corresponding to the number of priority levels;
- data telegrams (13a) present in an intermediate storage area (17a) allocated to a lower priority level are transmitted via the logical data link (15a) allocated to this priority level for such a time until at least one data telegram (13b) is present in an intermediate storage area (17b) allocated to a higher priority level; and
- the data telegram (13b) present in the intermediate storage area (17b) allocated to the higher priority level is transmitted via the logical data link (15b) allocated to the higher priority level,
**characterized in that**
- for the start-up of a system (10) of at least one transmitter (11a) and at least one receiver (11b), at least one of the devices (11a, 11b) sends a broadcast message to a destination address defined throughout the system, this destination address defined throughout the system being allocated to a particular priority level; and
- a device receiving this broadcast message takes a sender address, specifying the sender of the broadcast message, from the broadcast message and uses this sender address from then on as destination address for this priority level, allocated to the sender.

2. Method according to Claim 1,
**characterized in that**
- the current transmission of a data telegram (13a) via the logical data link (15a) allocated to the lower priority level is aborted as soon as a data telegram (13b) is present in the intermediate storage area (17b) allocated to the higher priority level.

3. Method according to Claim 2,
**characterized in that**
- an identification which marks the data telegram (13a) as to be discarded by the receiver (11b) is added to the data telegram (13a) transmitted incompletely due to the termination of transmission.

4. Method according to Claim 2 or 3,
**characterized in that**
- the transmission of the data telegram (13a) transmitted incompletely is repeated after the last data telegram (13b) currently present in the intermediate storage area (17b) allocated to the higher priority level has been transmitted.

5. Method according to Claim 1,
**characterized in that**
- the current transmission of a data telegram (13a) via the logical data link (15a) allocated to the lower priority level is first concluded before the data telegram (13b) present in the intermediate storage area (17b) allocated to the higher priority level is transmitted via the logical data link (15b) allocated to the higher priority level.

6. Method according to one of the preceding claims,
**characterized in that**
- the priority level for the respective data telegram (13a, 13b) is specified by means of a destination address used for the receiver (11b).

7. Method according to Claim 6,
**characterized in that**
- the destination addresses used for the different priority levels are determined in accordance with a specified rule so that, knowing a destination address which is allocated to a particular priority level, all destination addresses of the remaining priority levels can be derived from the known destination address.

8. Electrical device (11a) comprising
- a communication interface (14a) for establishing a communication link via a physical communication medium (12) to at least one further electrical device (11b), the physical communication medium (12) being arranged for transmitting data telegrams (13a, 13b) between the devices (11a, 11b), **characterized in that**
- the communication interface (14a) is arranged for establishing at least two logical data links (15a, 15b) via the physical communication medium (12), a different priority level being allocated to each logical data link (15a, 15b); and
- the electrical device (11a) is arranged for transmitting the data telegrams (13a, 13b) in accordance with a method according to one of Claims 1 to 7.

9. Electrical device (11a) according to Claim 8, **characterized in that**
- the electrical device (11a) is an automation device of an energy automation system, preferably an electrical protective device, an electrical field control unit, a station control unit, a device of an electrical power system control center or a communication device used in an energy automation system.

## Revendications

1. Procédé de transmission de télégrammes ( 13a, 13b ) de données d'un appareil ( 11a ) d'émission à au moins un appareil ( 11b ) de réception, dans lequel
- on affecte aux télégrammes ( 13a, 13b ) de données à transmettre un niveau de priorité, qui indique une priorité à prendre en compte, lors de la transmission du télégramme ( 13a, 13b ) de données respectif, de manière à ce que des télégrammes ( 13a, 13b ) de données ayant un niveau de priorité plus haut, par rapport à ceux ayant un niveau de priorité plus bas, soient transmis de l'appareil ( 11a ) d'émission à l'appareil ( 11b ) de réception, de préférence par un support ( 12 ) de communication physique, en liaison à la fois avec l'appareil ( 11a ) d'émission et avec l'appareil ( 11b ) de réception, dans lequel
- on affecte, dans l'appareil ( 11a ) d'émission, une partie ( 17a, 17b ) de mémoire tampon à chaque niveau de priorité ;
- on transmet les télégrammes ( 13a, 13b ) de données, par le support ( 12 ) de communication physique, par des liaisons ( 15a, 15b ) de données logiques différentes, le nombre des liaisons ( 15a, 15b ) de données logiques correspondant au nombre des niveaux de priorité ;
- on transmet les télégrammes ( 13a ) de données se trouvant dans une partie ( 17a ) de mémoire tampon affectée à un niveau de priorité plus bas, par la liaison ( 15a ) de données logique affectée à ce niveau de priorité, jusqu'à ce qu'il y ait au moins un télégramme ( 13b ) de données dans une partie ( 17b ) de mémoire tampon affectée à un niveau de priorité plus élevé et
- on transmet le télégramme ( 13b ) de données présent dans la partie ( 17b ) de mémoire tampon affectée au niveau de priorité plus élevé, par la liaison ( 15b ) de données logique affectée au niveau de priorité plus élevé,
**caractérisé en ce que**
- pour la mise en fonctionnement d'un système ( 10 ) composé d'au moins un appareil ( 11a ) d'émission et d'au moins un appareil ( 11b ) de réception, au moins l'un des appareils ( 11a, 11b ) émet un message radiodiffusé à une adresse de destination définie dans tout le système, cette adresse de destination définie dans tout le système étant affectée à un niveau de priorité déterminé et
- un appareil recevant ce message radiodiffusé prélève du message radiodiffusé une adresse d'émetteur indiquant l'émetteur du message radiodiffusé et utilise désormais, pour ce niveau de priorité, cette adresse d'émetteur comme adresse de destination affectée à l'émetteur.

2. Procédé suivant la revendication 1,
**caractérisé en ce que**
- on interrompt la transmission présente d'un télégramme ( 13a ) de données par la liaison ( 15a ) de données logique affectée au niveau de priorité plus bas, dès qu'il y a un télégramme ( 13b ) de données dans la partie ( 17b ) de mémoire intermédiaire affectée au niveau de priorité plus élevé.

3. Procédé suivant la revendication 2,
**caractérisé en ce que**
- on ajoute, au télégramme ( 13a ) de données transmis incomplètement par l'interruption de la transmission, une caractérisation, qui repère le télégramme ( 13a ) de données comme à rejeter par l'appareil ( 11b ) de réception.

4. Procédé suivant la revendication 2 ou 3,
**caractérisé en ce que**
- on répète la transmission du télégramme ( 13a ) de données transmis incomplètement, après que le dernier télégramme ( 13b ) de données, présent présentement dans la partie ( 17b ) de mémoire tampon affectée au niveau de priorité plus élevé, a été transmis.

5. Procédé suivant la revendication 1,
**caractérisé en ce que**
- on met fin d'abord à la transmission présente d'un télégramme ( 13a ) de données par la liaison ( 15a ) de données logique affectée au niveau de priorité plus bas, avant de transmettre, par la liaison ( 15b ) de données logique affectée au niveau de priorité plus élevé, le télégramme ( 13b ) de données présent dans la partie ( 17b ) de mémoire tampon affectée au niveau de priorité plus élevé.

6. Procédé suivant l'une des revendications précédentes,
**caractérisé en ce que**
- on effectue l'indication du niveau de priorité pour le télégramme ( 13a, 13b ) de données respectif, au moyen d'une adresse de destination utilisée de l'appareil ( 11b ) de réception.

7. Procédé suivant la revendication 6,
**caractérisé en ce que**
- on détermine les adresses de destination utilisées pour les niveaux de priorité différents, suivant une règle fixée, de sorte qu'en connaissant une adresse de destination, qui est affectée à un niveau de priorité déterminé, on peut déduire de l'adresse de destination connue toutes les adresses de destinations des autres niveaux de priorité.

8. Appareil ( 11a ) électrique comprenant
- une interface ( 14a ) de communication, pour établir une liaison de communication par un support ( 12 ) de communication physique avec au moins un autre appareil ( 11b ) électrique, le support ( 12 ) de communication physique étant agencé pour transmettre des télégrammes ( 13a, 13b ) de données entre les appareils ( 11a, 11b ),
**caractérisé en ce que**
- l'interface ( 14a ) de communication est agencée pour l'établissement d'au moins deux liaisons ( 15a, 15b ) de données logiques par le support ( 12 ) de communication physique, un niveau de priorité différent étant affecté à chaque liaison ( 15a, 15b ) de données logique et
- l'appareil ( 11a ) électrique est agencé pour la transmission des télégrammes ( 13a, 13b ) de données par un procédé suivant l'une des revendications 1 à 7.

9. Appareil ( 11a ) électrique suivant la revendication 8, **caractérisé en ce que**
- l'appareil ( 11a ) électrique est un appareil d'automatisation d'une installation d'automatisation d'énergie, de préférence un appareil de protection électrique, un appareil de gestion électrique sur site, un appareil de gestion de station, un appareil d'un point électrique de gestion de réseau ou un appareil de communication utilisé dans une installation d'automatisation d'énergie.
